(19) Europäisches Patentamt
European Patent Office
Office européen des brevets

(11) **EP 4 752 029 A1**

(12) **EUROPEAN PATENT APPLICATION**
published in accordance with Art. 153(4) EPC

(43) Date of publication:
**03.06.2026  Bulletin 2026/23**

(21) Application number: **24939066.7**

(22) Date of filing: **26.11.2024**

(51) International Patent Classification (IPC):
**B61L 15/00** (2006.01)

(86) International application number:
**PCT/CN2024/134660**

(87) International publication number:
**WO 2026/044959 (05.03.2026 Gazette 2026/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **30.08.2024  CN 202411203551**

(71) Applicant: **CRSC RESEARCH & DESIGN
INSTITUTE GROUP CO., LTD.
Fengtai District
Beijing
100070 (CN)**

(72) Inventors:
• **WANG, Qi
Beijing 100070 (CN)**
• **WANG, Jia
Beijing 100070 (CN)**
• **GE, Luming
Beijing 100070 (CN)**
• **WANG, Zhiyu
Beijing 100070 (CN)**
• **ZHANG, Qian
Beijing 100070 (CN)**
• **ZHAO, Zhongjia
Beijing 100070 (CN)**

(74) Representative: **Meissner Bolte Partnerschaft
mbB
Patentanwälte Rechtsanwälte
Postfach 86 06 24
81633 München (DE)**

(54) **LOCOMOTIVE ASSISTED DRIVING CURVE CALCULATION METHOD AND SYSTEM**

(57)      Disclosed in the present disclosure are a method and system for calculating a locomotive driving assistance curve. The method includes: first, determining a first continuous driving curve; second, obtaining a target point to be inserted in a corresponding running scene within a distance ahead of a train and corresponding target point information; then, comparing a target speed of the target point to be inserted with a first curve speed corresponding to a target position on the first continuous driving curve, and determining whether to add the target point to be inserted; obtaining, in a case where the target point to be inserted is added, a first intersection point and a second intersection point of a curve segment where the target point is inserted and the first continuous driving curve; and adding the target point to be inserted, the first intersection point, and the second intersection point, that are to be added, to the first continuous driving curve, to generate the locomotive driving assistance curve. The above method can make up for a deficiency that a train operation monitoring device (LKJ) curve cannot consider special scenes, and the method can effectively improve driving safety of locomotive drivers.

Determine a first continuous driving curve

Obtain a target point to be inserted in a corresponding running scene within a distance ahead of a train and corresponding target point information, where the target point information includes a target position, a target speed, an expected deceleration reaching the target point, and an expected acceleration reaching a next curve segment from the target point

Compare the target speed of the target point to be inserted with a first curve speed corresponding to the target position on the first continuous curve, and determine whether to add the target point to be inserted

Obtain, in a case where the target point to be inserted is added, a first intersection point and a second intersection point of a curve segment where the target point is inserted and the first continuous driving curve

Add the target point to be inserted, the first intersection point, and the second intersection point, that are to be added, to the first continuous driving curve, to generate the locomotive driving assistance curve

FIG. 1

**Description**

**TECHNICAL FIELD**

The present disclosure belongs to the technical field of rail transit, and particularly relates to a method and system for calculating a locomotive driving assistance curve.

**BACKGROUND**

During existing driving operations, locomotive drivers adjust the speed of trains in real time according to actual conditions to ensure the trains run smoothly. In this process, drivers need to improve driving accuracy and efficiency not only through extensive driving experience and keen observation skills, but also by leveraging advanced driving assistance technology. The locomotive drivers drive in complex line environments, primarily relying on a train operation monitoring device (LKJ) curve for safety protection. The LKJ curve can provide basic speed limit guidance to a certain extent, yet it also has significant limitations. Specifically, the LKJ curve primarily focuses on setting speed limit values, while lacking sufficient consideration for some special scenarios, such as phase separation sections and long steep down-ramps. For example, the phase separation section is a special zone of rail lines. When a locomotive passes through this zone, corresponding power switching operations need to be performed to ensure the locomotive can traverse smoothly and safely. The long steep down-ramp presents another classic complex scene, involving locomotive braking. Particularly when an air brake is applied, a driver must possess exceptional professional skills and extensive driving experience. However, the existing LKJ curve has limited guidance capabilities in these specific scenes and cannot provide drivers with sufficient support and assistance. Accordingly, in practical applications, the LKJ curve fails to satisfy the needs of drivers in complex line scenes and cannot fully leverage its intended role in driving assistance.

**SUMMARY**

In order to solve the problems, the present disclosure provides a method and system for calculating a locomotive driving assistance curve. The method and the system have strong adaptability, high safety, and high reliability.
An objective of the present disclosure is to provide a method for calculating a locomotive driving assistance curve. The method includes:

determining a first continuous driving curve;

obtaining a target point to be inserted in a corresponding running scene within a distance ahead of a train and corresponding target point information, where the target point information includes a target position, a target speed, an expected deceleration reaching the target point, and an expected acceleration reaching a next curve segment from the target point;

comparing the target speed of the target point to be inserted with a first curve speed corresponding to the target position on the first continuous driving curve, and determining whether to add the target point to be inserted;

obtaining, in a case where the target point to be inserted is added, a first intersection point and a second intersection point of a curve segment where the target point is inserted and the first continuous driving curve; and

adding the target point to be inserted, the first intersection point, and the second intersection point, that are to be added, to the first continuous driving curve, to generate the locomotive driving assistance curve.

Further, the determining a first continuous driving curve includes:

obtaining line information within a distance ahead of the train, and planning a first speed limit curve, where the line information includes running stages of the train and first running information of the train in the running stages;

obtaining the following second running information of the train:

a current speed of the train, expected accelerations or expected decelerations when the train runs in different running stages;

determining curve intersection points through a positive-order and/or reverse-order calculation method based on the obtained line information and the second running information; and

connecting the curve intersection points based on the first speed limit curve, to form the first continuous driving curve.

Further, the running stages of the train include a static speed limit running stage, a temporary speed limit running stage and an interval running time stage; and
the first running information of the train in the running stages includes start positions, speed limit values and speed limit distances.

Further, the comparing the target speed of the target point to be inserted with a first curve speed corresponding to the target position on the first continuous driving curve, and determining whether to add the target point to be inserted include:
determining whether the first curve speed is great than the target speed, where in a case where the first curve speed is greater than the target speed, the target point needs to be added; and otherwise, the existing first continuous driving curve is maintained.

Further, the obtaining, in a case where the target point to be inserted is added, a first intersection point and a second intersection point of a curve segment where the target point is inserted and the first continuous driving curve includes:

searching the first continuous driving curve forwards from an index of a curve segment where the target position is located, to find a first index curve segment, where the first index curve segment satisfies that a deceleration from a start position of the first index curve segment to the target position is greater than the expected deceleration b_acc; and

searching the first continuous driving curve backwards from the index of the curve segment where the target position is located, to find a second index curve segment, where the second index curve segment satisfies that an acceleration from a start position of the second index curve segment to the target position is less than an expected acceleration a_acc.

Further, the method for calculating a locomotive driving assistance curve further includes: calculating a position point (b_pos, b_v) of the first intersection point and a position point (a_pos, a_v) of the second intersection point, where the calculating a position point (b_pos, b_v) of the first intersection point includes:

obtaining start position information (temp1_pos, temp1_v) of the first index curve segment and an acceleration temp1_acc of a curve segment where the first intersection point is located; and

calculating the position point (b_pos, b_v) of the first intersection point based on the target point information, the obtained start position information (temp1_pos, templ_v) of the first index curve segment, and the obtained acceleration temp1_acc of the curve segment where the first intersection point is located:

$b\_pos=(target\_v^2-temp1\_v^2-2 * b\_acc * target\_pos+2 * temp1\_acc * temp1\_pos)/(2 * (temp1\_acc-b\_acc))$

$$b\_v=(target\_v^2-2*b\_acc*(target\_pos-b\_pos))^{1/2}$$

the calculating a position point (a_pos, a_v) of the second intersection point includes:

obtaining start position information (temp1_pos, temp1_v) of the second index curve segment and an acceleration temp1_acc of a curve segment where the second intersection point is located; and

calculating the position point (a_pos, a_v) of the second intersection point based on the target point information, the obtained start position information (temp2_pos, temp2_v) of the second index curve segment, and the acceleration temp2_acc of the curve segment where the second intersection point is located:

$a\_pos=(target\_v^2-temp2\_v^2-2 * a\_acc * target \_pos+2 * temp2\_acc * temp2\_pos)/(2 * (temp2\_acc-a\_acc))$

$$a\_v=(target\_v^2-2*a\_acc*(target\_pos-a\_pos))^{1/2}$$

where target_v is the target speed of the target point, and target_pos is the target position of the target point.

Further, the running scenes include a stopping point, a phase separation section, a long steep down-ramp, and/or a target speed and a target position of automatic train protection (ATP).

Further, when the corresponding running scene within a distance ahead of the train includes the stopping point, the target point is the stopping point, stopping point information is obtained, a target position in the stopping point information is a stopping position, a target speed is 0, an expected deceleration reaching the stopping point is a stopping deceleration, and an expected acceleration reaching a next curve segment from the stopping point is 0.

Further, when the corresponding running scene within a distance ahead of the train includes the phase separation section, a target point of the phase separation section includes a start position and an end position for phase separation, where the start position information is obtained as follows:

obtaining a target position in start position information of a phase separation section as gfx_pos and a length of the phase separation section as gfx_len in real time;

determining whether a current position of the train falls within the phase separation section, and in a case where the current position of the train does not fall within the phase separation section,

defining, based on the target position gfx_pos, that an expected deceleration reaching the start position of the phase separation section is gfx_b_start_bcc, and an expected acceleration reaching a next curve segment from the start position of the phase separation section is gfx_a_start_acc;

obtaining a start position of a running stage, on the first continuous driving curve, corresponding to the start position of the phase separation section, and calculating a distance between the start position gfx_pos of the phase separation section and the obtained start position of the running stage;

obtaining a target speed of the start position of the phase separation section as v_gfx based on speed limit information, expected acceleration information, and the calculated distance of the running stage, obtained on the first continuous driving curve, corresponding to the start position of the phase separation section; and

defining, in a case where the current position of the train falls within the phase separation section, that the target position in the start position information is the current position gfx_pos, the target speed is the current speed v, the expected deceleration reaching the start position of the phase separation section is 0, and the expected acceleration reaching a next curve segment from the start position of the phase separation section is gfx_a_start_acc.

Further, end position information is obtained as follows:

determining whether the current position of the train falls within the phase separation section, and defining, in a case where the current position of the train does not fall within the phase separation section, that a target position in the end position information is gfx_end_pos, a target speed is v_gfx, an expected deceleration reaching the end position of the phase separation section is 0, and an expected acceleration reaching a next curve segment from the end position of the phase separation section is gfx_a_end_acc; and

defining, in a case where the current position of the train falls within the phase separation section, that the end position of the phase separation section is gfx_end_pos, the target speed is the current speed v, the expected deceleration reaching the end position of the phase separation section is 0, and the expected acceleration reaching the next curve segment from the end position of the phase separation section is gfx_a_end_acc.

Further, when the corresponding running scene within a distance ahead of the train includes the long steep down-ramp, target point information in the long steep down-ramp is obtained as follows:

first, calculating a long steep down-ramp position ramp_start_pos closest to the train ahead of the train;

obtaining a speed ramp_v when an air brake is applied on the long steep down-ramp:

$$ramp\_v = coast\_v - \Delta v$$

where ramp_v is a target speed, coast_v is a speed of a curve segment where the long steep down-ramp position is located, $\Delta v$ is a speed threshold, and the speed threshold $\Delta v$ satisfies:

$$\mathrm{D}v = (acc_{\text{maximum acceleration of electric brake}} * 4/7 - ramp) * (t_{\text{charging time}} + t_{\text{brake cancellation delay}} + t_{\text{brake application delay}})$$

where ramp is a gradient corresponding to a current position of the train, and $acc_{\text{maximum acceleration of electric brake}}$=F maximum electric brake/W; and

calculating a deviation distance according to ramp_v, coast_v, and an air brake deceleration target_acc:

$$dis = (ramp\_v^2 - coast\_v^2)/2/target\_acc$$

long steep down-ramp target position ramp_pos=ramp_start_pos+dis, where

an expected deceleration reaching a target point of the long steep down-ramp is the air brake deceleration target_acc, and an expected acceleration reaching a next curve segment from the target point of the long steep down-ramp is ramp_a_acc.

The other objective of the present disclosure is to provide a system for calculating a locomotive driving assistance curve. The system includes:

a determination module configured to determine a first continuous driving curve;

an obtaining module configured to obtain a target point to be inserted in a corresponding running scene within a distance ahead of a train and corresponding target point information, where the target point information includes a target position, a target speed, an expected deceleration reaching the target point, and an expected acceleration reaching a next curve segment from the target point;

a determining module configured to compare the target speed of the target point to be inserted with a first curve speed corresponding to the target position on the first continuous driving curve, and determine whether to add the target point to be inserted;

a calculation module configured to obtain, in a case where the target point to be inserted is added, a first intersection point and a second intersection point of a curve segment where the target point is inserted and the first continuous driving curve; and

a generation module configured to add the target point to be inserted, the first intersection point, and the second intersection point, that are to be added, to the first continuous driving curve, to generate the locomotive driving assistance curve. The method of the present disclosure can cover an entire running process of the locomotive and provide prompt and guidance for a driver. The target point of the running scene in the running process of the train is added to the driving assistance curve, thus the method can make up for a deficiency that a train operation monitoring device (LKJ) curve cannot consider special scenes, and the method can effectively improve driving safety of the locomotive driver. Moreover, the method provides a solid foundation for intelligent and automatic development of the railway industry.

Other features and advantages of the present disclosure will be set forth in the following specification, and in part will be apparent from the specification, or will be learned by the practice of the present disclosure. The objectives and other advantages of the present disclosure are achieved and obtained from the structure pointed out in the specification, claims and accompanying drawings.

## BRIEF DESCRIPTION OF THE DRAWINGS

In order to describe the technical solutions in examples of the present disclosure or in the prior art more clearly, the accompanying drawings required for describing the examples or the prior art are briefly described below. Apparently, the accompanying drawings in the following description show some examples of the present disclosure. Those of ordinary skill in the art can still derive other accompanying drawings from these accompanying drawings without creative efforts.

FIG. 1 is a schematic flowchart of a method for calculating a locomotive driving assistance curve in an example of the present disclosure.

FIG. 2 is a schematic diagram of a first speed limit curve in an example of the present disclosure.

FIG. 3 is a schematic diagram of a first continuous driving curve in an example of the disclosure.

FIG. 4 is a schematic diagram for calculating a relationship between position points of a first intersection point and a second intersection point in an example of the present disclosure.

FIG. 5 is a schematic diagram of a locomotive driving assistance curve after a stopping point is added in an example of the present disclosure.

FIG. 6 is a schematic diagram of a locomotive driving assistance curve after a stopping point and a target point for phase separation are added in an example of the present disclosure.

FIG. 7 is a schematic diagram of a locomotive driving assistance curve after a stopping point, a target point for phase separation, and a target point of a long steep down-ramp in an example of the present disclosure.

FIG. 8 is a schematic diagram of a locomotive driving assistance curve in an example of the present disclosure.

FIG. 9 is a schematic structural diagram of a system for calculating a locomotive driving assistance curve in an example of the present disclosure.

**DETAILED DESCRIPTION OF EMBODIMENTS**

To make the objectives, technical solutions, and advantages in examples of the present disclosure clearer, the technical solutions in the examples of the present disclosure are clearly and completely explained below with reference to the accompanying drawings in the examples of the present disclosure. Apparently, the examples described are some examples rather than all examples of the present disclosure. Based on the examples in the present disclosure, all other examples derived by those of ordinary skill in the art without creative efforts fall within the protection scope of the present disclosure.

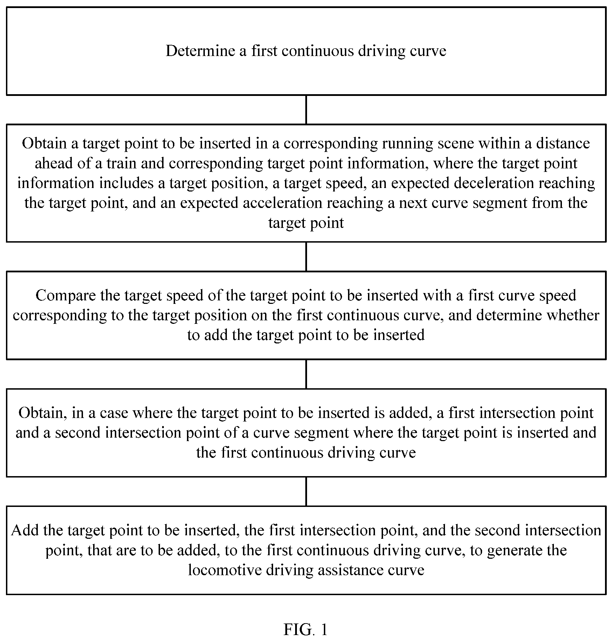

As shown in FIG. 1, an example of the present disclosure introduces a method for calculating a locomotive driving assistance curve. The method includes: first, a first continuous driving curve is determined; second, a target point to be inserted in a corresponding running scene within a distance ahead of a train and corresponding target point information are obtained, where the target point information includes a target position, a target speed, an expected deceleration reaching the target point, and an expected acceleration reaching a next curve segment from the target point; then, the target speed of the target point to be inserted is compared with a first curve speed corresponding to the target position on the first continuous driving curve, and whether to add the target point to be inserted is determined; then, in a case where the target point to be inserted is added, a first intersection point and a second intersection point of a curve segment where the target point is inserted and the first continuous driving curve are obtained; and finally, the target point to be inserted, the first intersection point, and the second intersection point, that are to be added, are added to the first continuous driving curve, to generate the locomotive driving assistance curve. The method can cover an entire running process of the locomotive and provide prompt and guidance for a driver. The target point of the running scene in the running process of the train is added to the driving assistance curve, thus the method can make up for a deficiency that a train operation monitoring device (LKJ) curve cannot consider special scenes, and the method can effectively improve driving safety of the locomotive driver. Moreover, the method provides a solid foundation for intelligent and automatic development of the railway industry.

The driving assistance curve should plan a driving speed assistance curve within a distance ahead of the train in real time according to a speed of a current position of the train, front line information, automatic train protection (ATP) information, a stopping point, a phase separation scene, etc. The driving assistance curve is updated at regular intervals and updated immediately when the stopping point is retracted. When driver operation does not conform to a planned curve, a curve change is adjusted in real time according to the driver operation. The above distance ahead may be 10 km, but is not limited thereto, and 50 km and the like are also applicable to the present disclosure. The regular interval may be 2 seconds, but is not limited thereto, and 5 seconds and the like are also applicable to the present disclosure.

In the example of the present disclosure, the method for calculating a locomotive driving assistance curve includes:

S1, a first continuous driving curve is determined. Specifically,

first, line information within a distance ahead of the train is obtained, and a first speed limit curve is planned. The line information includes a running stage of the train and first running information of the train in the running stage. The first speed limit curve is a base speed limit curve. Further, the running stages of the train include, but are not limited to, one or more of a static speed limit running stage, a temporary speed limit running stage and an interval running time stage. Other running stages are also applicable to the present disclosure. The first running information of the train in the running stages includes start positions, speed limit values and speed limit distances of the running stages.

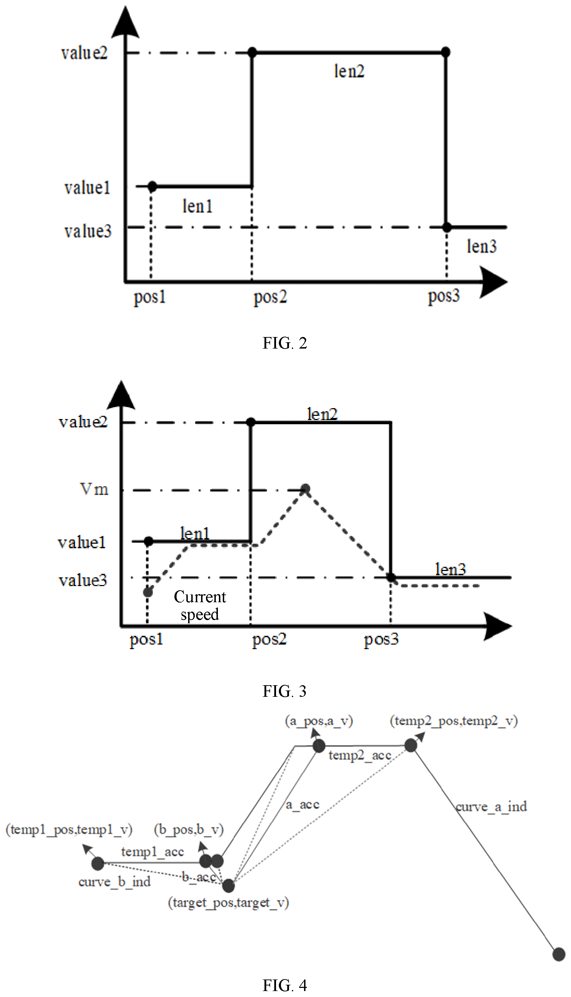

Illustratively, in a case where the train runs in the three running stages of the static speed limit running stage, the temporary speed limit running stage and the interval running time stage, the first speed limit curve used as the basic speed limit curve is shown in FIG. 2. Curve information is shown in Table 1:

Table 1 Curve information of first speed limit curve

| Position (cm) | Speed limit (cm/s) | Length (cm) |
|---|---|---|
| pos1 | value1 | len1 |
| pos2 | value2 | len2 |
| pos3 | value3 | len3 |

The following contents in the example of the present disclosure are described illustratively based on information shown in Table 1 and FIG. 2, which are not repeated herein.

Second, the following second running information of the train are obtained: a current speed of the train, expected accelerations, and/or expected decelerations when the train runs in different running stages.

Then, based on the first speed limit curve, curve intersection points are determined through a positive-order and/or reverse-order calculation method based on the obtained line information and the second running information. The curve intersection points are speed points to which the train can accelerate or decelerate according to the expected acceleration or expected deceleration. Specifically, assuming that the expected acceleration and/or expected deceleration of the train in all different running stages are t_acc and/or b_acc, and the current position of the train is at a start position of the static speed limit stage, a distance required for the train to accelerate from the current speed v to a speed limit value1 is s1:

$$s1 = (value1^2 - v^2)/2/t\_acc$$

In a case where s1 is less than a length len1 of a speed limit segment where the current speed is located, a coasting distance s2 exists:

$$s2 = len1 - s1$$

Thus an intersection point of a curve is (pos1+s1, value1) from the current position of the train to an end of the static speed limit running stage. A running length of the train running according to the speed limit value1 is s2, and an acceleration or deceleration in this stage is 0.

In FIG. 2, a speed of the train in the temporary speed limit stage is value2, value2>value1, and accelerating is required, such that a distance required for the train to accelerate from value1 to value2 is:

$$s3 = (value2^2 - value1^2)/2/t\_acc$$

Further, when a speed of the train in the interval running time stage is value3, value3<value2, and decelerating is required, such that a distance required for the train to decelerate from value2 to value3 is:

$$s4 = (value3^2 - value2^2)/2/b\_acc$$

Assuming that s3+s4>len2, $v_m$ needs to be searched for between value3 and value2, such that s3+s4<=len2 is satisfied, and a distance s5 required from value1 to $v_m$ is calculated:

$$s5=(v_m^2-value1^2)/2/t\_acc$$

A distance s6 required for the train from $v_m$ to value3 is calculated:

$$s6=(value3^2-v_m^2)/2/b\_acc.$$

That is, s5+s6<=len2.

The curve intersection point of the train in the temporary speed limit running stage is obtained as (pos2+s5, vm). Since value3 is less than value2, the curve intersection point after decelerating from the temporary speed limit running stage is the start point of the interval running time stage. The train runs at the speed limit value value3 in the interval running time stage, and a running length can be to a line data end point, that is, len3=s7.

Finally, after the curve intersection points are determined, the first continuous driving curve is obtained by connecting based on determining the first speed limit curve. Specifically, the first continuous driving curve is shown in FIG. 3. Curve information of the first continuous driving curve is shown in Table 2:

Table 2 Curve information of first continuous driving curve

| Start position (cm) | Length (cm) | Target speed (cm/s) | Acceleration/deceleration (cm/s$^2$) |
|---|---|---|---|
| pos1 | s1 | value1 | t_acc |
| pos1+s1 | s2 | value1 | 0 |
| pos2 | s5 | $v_m$ | t_acc |
| pos2+s5 | s6 | value3 | b_acc |
| pos3 | len3 | value3 | 0 |

S2, the target point information is input by using a general target point adding algorithm, and the target points in the running scenes are added to the first continuous driving curve to form the locomotive driving assistance curve. Specifically,

S21, a target point to be inserted in a corresponding running scene within a distance ahead of a train and corresponding target point information are obtained, where the target point information includes a target position target_pos, a target speed target_v, an expected deceleration b_acc reaching the target point, and an expected acceleration a_acc reaching a next curve segment from the target point. The target position and the expected deceleration or the expected acceleration in the target point information are configuration parameters. The configuration parameters may be modified according to the actual situation. In application, the corresponding configuration parameters may be directly obtained. The running scenes include, but are not limited to, a stopping point, a phase separation section, a long steep down-ramp, and/or a target speed and a target position of ATP. Other running scenes are applicable to the present disclosure.

Illustratively, three running scenes of a stopping point, a phase separation section and a long steep down-ramp within a distance ahead of the train are added to the interval running time stage, the temporary speed limit running stage and the static speed limit running stage on the first continuous driving curve shown in FIG. 3 respectively for illustrative description.

1) When the corresponding running scene within a distance ahead of the train includes the stopping point, stopping point information is obtained. The stopping point information includes a stopping position stop_pos, a target speed is 0, an expected deceleration reaching the stopping point is a stopping deceleration stop_bcc, and an expected acceleration reaching a next curve segment from the stopping point is 0.

2) When the corresponding running scene within a distance ahead of the train includes the phase separation section, a target point of the phase separation section is obtained. The target point of the phase separation section includes a start position and an end position for phase separation. The start position information is obtained as follows.

A start position gfx_pos of a phase separation section and a length gfx_len of the phase separation section are obtained in real time.

Whether a current position of the train falls within the phase separation section is determined. In a case where the current position of the train does not fall within the phase separation section,

a target position of the start position information is gfx_pos, an expected deceleration reaching the start position of the phase separation section is gfx_b_start_bcc, and an expected acceleration reaching a next curve segment from the start position of the phase separation section is gfx_a_start_acc.

a start position pos2 of a running stage, on the first continuous driving curve, corresponding to the start position of the phase separation section is obtained. A distance s9 between the start position gfx_pos of the phase separation section and the obtained corresponding start position pos2 of the running stage is calculated, where s9=gfx_pos-pos2.

A target speed of the start position of the phase separation section is obtained as v_gfx based on speed limit information, expected acceleration information t_acc, and the calculated distance s9 of the running stage, obtained on the first continuous driving curve, corresponding to the start position of the phase separation section, and $v\_gfx=value1^2 +2*t\_acc*s9$.

In a case where the current position of the train falls within the phase separation section, the target position in the start position information is the current position of the train, the target speed is the current speed v, the expected deceleration reaching the start position of the phase separation section is 0, and the expected acceleration reaching a next curve segment from the start position of the phase separation section is gfx_a_start_acc.

Target point information of the end position is obtained as follows.

Whether the current position of the train falls within the phase separation section is determined. In a case where the current position of the train does not fall within the phase separation section, a target position in the target point information of the end position information is gfx_end_pos, a target speed at the end position of the phase separation section is v_gfx, an expected deceleration reaching the end position of the phase separation section is 0, and an expected acceleration reaching a next curve segment from the end position of the phase separation section is gfx_a_end_acc.

In a case where the current position of the train falls within the phase separation section, the end position of the phase separation section is gfx_end_pos, the target speed is the current speed v, the expected deceleration reaching the end position of the phase separation section is 0, and the expected acceleration reaching the next curve segment from the end position of the phase separation section is gfx_a_end_acc.

3) When the corresponding running scene within a distance ahead of the train includes the long steep down-ramp, target point information in the long steep down-ramp is obtained as follows.

First, a long steep down-ramp position ramp_start_pos closest to the train ahead of the train is calculated.

a speed ramp_v when an air brake is applied on the long steep down-ramp is obtained:

$$ramp\_v=coast\_v-\Delta v$$

where ramp_v is a target speed of the target point of the long steep down-ramp, coast_v is a speed of a curve segment where the long steep down-ramp position is located, and $\Delta v$ is a speed threshold. The speed threshold $\Delta v$ satisfies:

$$\Delta v = (acc_{\text{maximum acceleration of electric brake}} * 4/7 - ramp) * (t_{\text{charging time}} + t_{\text{brake cancellation delay}} + t_{\text{brake application delay}})$$

where ramp is a gradient corresponding to a start position of the long steep down-ramp, $acc_{\text{maximum acceleration of electric brake}}$ may be calculated by searching train parameters for a maximum electric brake force F maximum electric brake of the train and a load W of the train, that is, $acc_{\text{maximum acceleration of electric brake}}$=F maximum electric brake/W, $t_{\text{charging time}}$ is air brake charging time, $t_{\text{brake cancellation delay}}$ is air brake cancellation delay time, and $t_{\text{brake application delay}}$ is air brake application delay time.

A deviation distance is calculated according to ramp_v, coast_v, and an air brake deceleration target_acc:

$$dis=(ramp\_v^2-coast\_v^2)/2/target\_acc$$

long steep down-ramp target position ramp_pos=ramp_start_pos+dis, where an expected deceleration reaching a target point of the long steep down-ramp is the air brake deceleration target_acc, and an expected acceleration reaching a next curve segment from the target point of the long steep down-ramp is ramp_a_acc.

S22, whether to add the target point to be inserted is determined based on the target speed of the target point to be inserted and a first curve speed corresponding to the target position on the first continuous driving curve. Specifically, whether the first curve speed is great than the target speed is determined. In a case where the first curve speed is greater than the target speed, the target point needs to be added; and otherwise, the existing first continuous driving curve is maintained.

S23, in a case where the target point to be inserted is added, a first intersection point and a second intersection point of a curve segment where the target point is inserted and the first continuous driving curve are obtained. Illustratively, as shown in FIG. 4, on the first continuous driving curve, the first continuous driving curve is searched forwards from an index of a curve segment where the target position is located, to find a first index curve segment. It is satisfied that a deceleration from a start position of the first index curve segment to the target position is greater than the expected deceleration b_acc. The first index curve segment is recorded as curve_b_ind. The first continuous driving curve is searched backwards from the index of the curve segment where the target position is located, to find a second index curve segment. It is satisfied that an acceleration from a start position of the second index curve segment to the target position is less than an expected acceleration a_acc. The second index curve segment is recorded as curve_a_ind. It should be noted that since the train needs to reach the target position from the start position of the first index curve segment according to the desired deceleration, or reach the target position from the start position of the second index curve segment according to the desired acceleration, the intersection point to be calculated is located in front of the start position of the index curve segment (in front of a direction opposite a direction of searching for the index curve segment).

In the example of the present disclosure, as shown in FIG. 4, the method for calculating further includes: a position point (b_pos, b_v) of the first intersection point and a position point (a_pos, a_v) of the second intersection point are calculated. Specifically, the position point (b_pos, b_v) of the first intersection point is calculated as follows.

The start position (temp1_pos, temp1_v) of the first index curve segment and an acceleration temp1_acc of a curve segment where the first intersection point is located are obtained. The position point (b_pos, b_v) of the first intersection point is obtained based on the target speed target_v, the target position target_pos, and the expected deceleration b_acc in the corresponding target point information:

$$b\_pos=(target\_v^2-temp1\_v^2-2 * b\_acc * target\_pos+2 * temp1\_acc * temp1\_pos)/(2 * (temp1\_acc-b\_acc))$$

$$b\_v=(target\_v^2-2*b\_acc*(target\_pos-b\_pos))^{1/2}.$$

The position point (a_pos, a_v) of the second intersection point is calculated as follows.

The start position (temp2_pos, temp2_v) of the second index curve segment curve_a_ind and an acceleration temp2_acc of a curve segment where the second intersection point is located are obtained. The position point (a_pos, a_v) of the second intersection point is obtained based on the target speed target_v, the target position target_pos, and the expected acceleration a_acc in the corresponding target point information. The position point of the second intersection point satisfies:

$$a\_pos=(target\_v^2-temp2\_v^2-2 * a\_acc * target\_pos+2 * temp2\_acc * temp2\_pos)/(2 * (temp2\_acc-a\_acc))$$

$$a\_v=(target\_v^2-2*a\_acc*(target\_pos-a\_pos))^{1/2}.$$

Illustratively, the stopping point information is introduced to check whether a first curve speed value3 of the stopping point is greater than the target speed 0. In a case where the value3 is greater than 0, a stopping point needs to be added to obtain a position point of an intersection point related to the stopping point. Finally, the position point of the intersection point and the stopping point are added to the first continuous driving curve, such that the position point of the first intersection point between the curve where the stopping point is inserted and the first continuous driving curve is calculated as follows.

Assuming that the start position of the first index curve segment is (pos3, value3), a position point (stop_b_pos, stop_b_v) of the first intersection point of the stopping point is obtained, and an acceleration of the curve segment where the first intersection point is located is 0. The position point (stop_b_pos, stop_b_v) of the intersection point of the first point of the stopping point is calculated based on the stopping point position stop_pos in the stopping point information, the target speed being 0, and the expected deceleration reaching the target point being the stopping deceleration stop_bcc. The position point satisfies:

$$\text{stop\_b\_pos}=(0^2\text{-value3}^2\text{-2}*\text{stop\_acc}*\text{stop\_pos}+2*0*\text{pos3})/(2*(0\text{-b\_acc}))$$

$$\text{stop\_b\_v}=(0^2\text{-2}*\text{stop\_acc}*(\text{stop\_pos - stop\_b\_pos}))^{1/2}$$

Since the stopping point is an end point of the assistance curve, there is no need to search for the position point of the second intersection point.

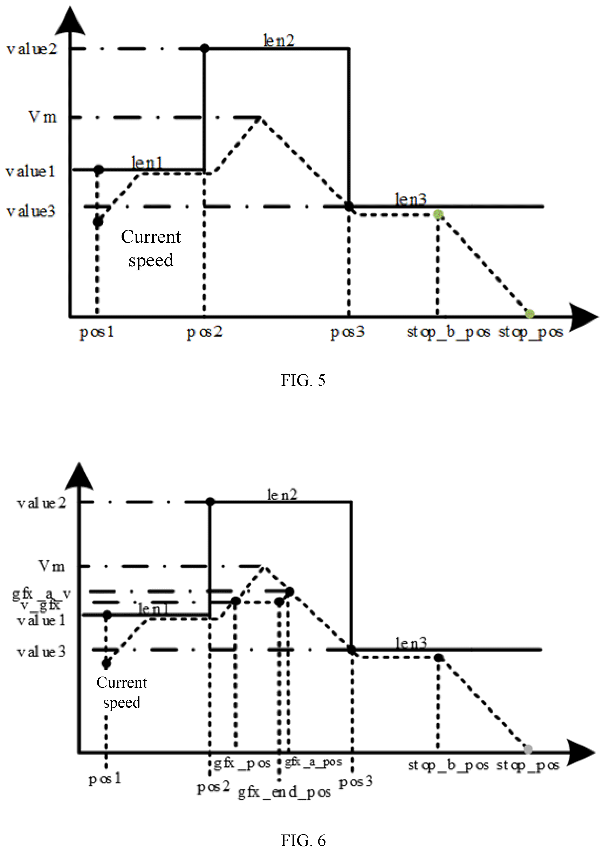

After the first intersection point position (stop_b_pos, stop_b_v) and the stopping point position (stop_pos, 0) are added, an obtained curve is shown in FIG. 5. Curve information is shown in Table 3:

Table 3 Curve information of locomotive driving assistance curve formed by adding stopping point

| Start position (cm) | Length (cm) | Target speed (cm/s) | Acceleration/deceleration (cm/s$^2$) |
|---|---|---|---|
| pos1 | s1 | value1 | t_acc |
| pos1+s1 | s2 | value1 | 0 |
| pos2 | s5 | $v_m$ | t_acc |
| pos2+s5 | s6 | value3 | b_acc |
| pos3 | stop_b_pos-pos3 | value3 | 0 |
| stop_b_pos | stop_pos-stop_b_pos | 0 | stop_acc |
| stop_pos | 0 | 0 | 0 |

Further, phase separation information is added. For example, the current position does not fall within the phase separation section, the start position and the end position for phase separation are substituted to calculate relevant intersection point positions. A calculation process is as follows:

Position information of the start position of an inserting phase separation section is gfx_pos, a target speed is v_gfx, an expected deceleration reaching the start position of the phase separation section is gfx_b_start_bcc, and an expected acceleration reaching a next curve segment from the start position of the phase separation section is gfx_a_start_acc. Assuming that the first curve speed corresponding to the start position is equal to the target speed v_gfx, the existing first continuous driving curve is maintained, that is, the start position is on the first continuous driving curve. Thus there is no intersection point position between the start position and the first continuous driving curve. The start position (gfx_pos, v_gfx) of the phase separation section is added.

Position information of the end position of the inserting phase separation section is gfx_end_pos, a target speed is v_gfx, an expected deceleration reaching the end position of the phase separation section is 0, and an expected acceleration reaching a next curve segment from the end position of the phase separation section is gfx_a_end_acc. The end position is connected to the curve segment of the start position of the phase separation section. Thus it is unnecessary to search for the position point of the first intersection point.

Assuming that the start position of the second index curve segment is (pos3, value3), and the acceleration of the curve segment where the second intersection point is located is b_acc, the position point (gfx_a_pos, gfx_a_v) of the second intersection point satisfies:

gfx_a_pos=(v_gfx$^2$-value3$^2$-2 * gfx_a_end_acc * gfx_end_pos+2 * b_acc * pos3)/(2 * (b_acc-gfx_a_end_acc))

$$\text{gfx\_a\_v}=(\text{v\_gfx}^2\text{-2}*\text{gfx\_a\_end\_acc}*(\text{pos3-gfx\_a\_pos}))^{1/2}.$$

The end position (gfx_end_pos, v_gfx) of the phase separation section is added. The position (gfx_a_pos, gfx_a_v) of the second intersection point of the curve where the end position of the phase separation section is located and the first continuous driving curve is added.

An obtained continuous curve is shown in FIG. 6. Curve information is shown in Table 4:

Table 4 Curve information of locomotive driving assistance curve formed by adding stopping point and target point of phase separation section

| Start position (cm) | Length (cm) | Target speed (cm/s) | Acceleration/deceleration (cm/s$^2$) |
|---|---|---|---|
| pos1 | s1 | value1 | t_acc |
| pos1+s1 | s2 | value1 | 0 |
| pos2 | s9 | v_gfx | t_acc |
| gfx_pos | gfx_len | v_gfx | 0 |
| gfx_end_pos | gfx_a_pos-gfx_end_pos | gfx_a_v | gfx_a_end_acc |
| gfx_a_pos | pos3-gfx_a_pos | value3 | b_acc |
| pos3 | stop_b_pos-pos3 | value3 | 0 |
| stop_b_pos | stop_pos-stop_b_pos | 0 | b_acc |
| stop_pos | 0 | 0 | 0 |

Further, a target point of the long steep down-ramp is added. Target point information of the long steep down-ramp is substituted. According to the to-be-inserted target point information of the long steep down-ramp, a target position is ramp_pos, a target speed is ramp_v, an expected deceleration reaching the target point of the long steep down-ramp is an air brake deceleration target_acc, and an expected acceleration reaching a next curve segment from the target point position of the long steep down-ramp is ramp_a_acc. First, the target speed ramp_v is less than the speed value1 corresponding to the target position on the first continuous driving curve. Thus the target point is added. A relative intersection point position of the target point is obtained. A calculating process is as follows.

Assuming that the start position of the first index curve segment is (pos1+s1, value1), the acceleration of the curve segment where the first intersection point is located is 0, and the position point (ramp_b_pos, ramp_b_v) of the first intersection point satisfies:

ramp_b_pos=(ramp_v$^2$-value1$^2$-2 * target_acc * ramp_pos+2 * 0 * (pos1+s1))/(2 * (0-target_acc))

$$ramp\_b\_v=(ramp\_v^2\text{-}2*target\_acc*(ramp\_pos\text{-}ramp\_b\_pos))^{1/2}$$

Assuming that the start position of the second index curve segment is (pos2, value1), the acceleration of the curve segment where the first intersection point is located is 0, and the position point (ramp_a_pos, ramp_a_v) of the second intersection point position satisfies:

ramp_a_pos=(ramp_v$^2$-value1$^2$-2 * 0 * ramp_pos+2 * ramp_a_acc * pos2)/(2 * (0-ramp_a_acc))

$$ramp\_a\_v=(ramp\_v^2\text{-}2*ramp\_a\_acc*(ramp\_pos\text{-}ramp\_a\_pos))^{1/2}.$$

The position point (ramp_pos, ramp_v) of the target point of the long steep down-ramp, the position point (ramp_b_pos, ramp_b_v) of the first intersection point, and the position point (ramp_a_pos, ramp_a_v) of the second intersection point are added.

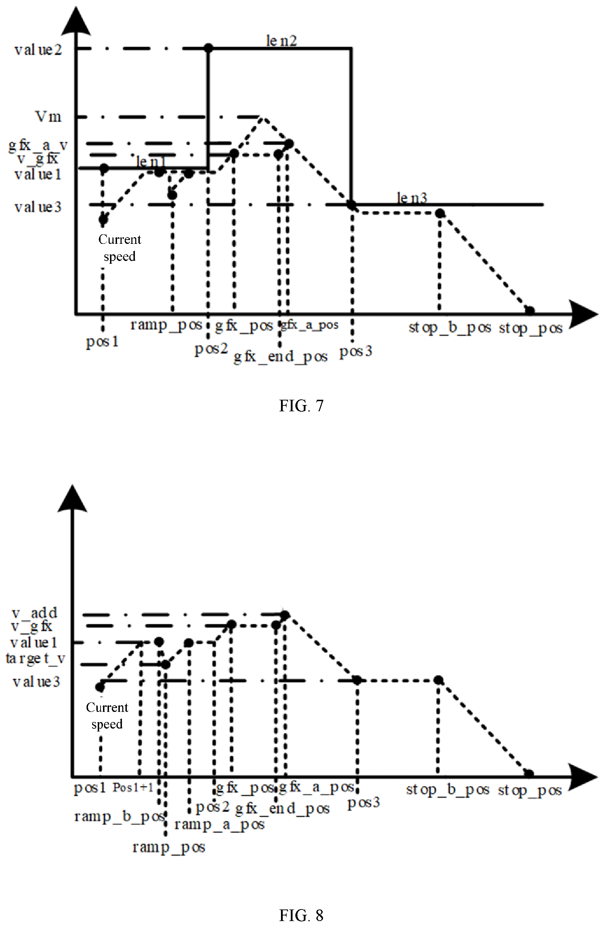

An obtained continuous curve is shown in FIG. 7. Curve information is shown in Table 5:

Table 5 Curve information of locomotive driving assistance curve formed by adding stopping point, and target point of phase separation section, and target point of long steep down-ramp

| Start position (cm) | Length (cm) | Target speed (cm/s) | Acceleration/deceleration (cm/s$^2$) |
|---|---|---|---|
| pos1 | s1 | value1 | t_acc |
| pos1+s1 | s11 | value1 | 0 |
| ramp_a_pos | ramp_pos-ramp_a_pos | target_v | target_acc |

(continued)

| Start position (cm) | Length (cm) | Target speed (cm/s) | Acceleration/deceleration (cm/s²) |
|---|---|---|---|
| ramp_pos | ramp_b_pos-ramp_pos | value1 | ramp_a_acc |
| ramp_b_pos | pos2-ramp_b_pos | value1 | 0 |
| pos2 | s9 | v_gfx | t_acc |
| gfx_pos | gfx_len | v_gfx | 0 |
| gfx_end_pos | gfx_a_pos-gfx_end_pos | gfx_a_v | gfx_a_end_acc |
| gfx_a_pos | pos3-gfx_a_pos | value3 | b_acc |
| pos3 | stop_b_pos-pos3 | value3 | 0 |
| stop_b_pos | stop_pos-stop_b_pos | 0 | b_acc |
| stop_pos | 0 | 0 | 0 |

S24, the target point to be inserted, a position point of the first intersection point, and a position point of the second intersection point, that are to be added, are added to the first continuous driving curve, to generate the locomotive driving assistance curve. As shown in FIG. 8, the target points in the stopping point, the phase separation section and the long steep down-ramp are added to the first continuous driving curve, to generate the locomotive driving assistance curve.

The locomotive driving assistance curve provides detailed information of the running state of a line ahead for the driver. The driver can know the running state, including key parameters such as speed and traction force, of the train ahead in advance with reference to the driving assistance curve. This allows the driver to predict traction, brake level and air brake application timing in advance, thus controlling the train to run more accurately.

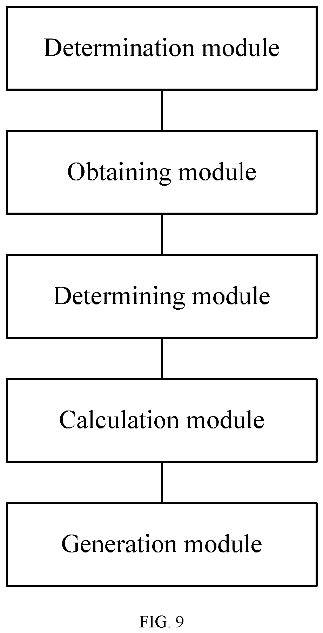

As shown in FIG. 9, an example of the present disclosure further introduces a system for calculating a locomotive driving assistance curve that can perform the above method. The system includes a determination module, an obtaining module, a determining module, a calculation module, and a generation module. The determination module is configured to determine a first continuous driving curve. The obtaining module is configured to obtain a target point to be inserted in a corresponding running scene within a distance ahead of a train and corresponding target point information. The target point information includes a target position, a target speed, an expected deceleration reaching the target point, and an expected acceleration reaching a next curve segment from the target point. The determining module is configured to compare the target speed of the target point to be inserted with a first curve speed corresponding to the target position on the first continuous driving curve, and determine whether to add the target point to be inserted. The calculation module is configured to obtain, in a case where the target point to be inserted is added, a first intersection point and a second intersection point of a curve segment where the target point is inserted and the first continuous driving curve. The generation module is configured to add the target point to be inserted, the first intersection point, and the second intersection point, that are to be added, to the first continuous driving curve, to generate the locomotive driving assistance curve. The system can cover an entire running process of the locomotive and provide prompt and guidance for a driver. The target point of the running scene in the running process of the train is added to the driving assistance curve, thus the method can make up for a deficiency that a train operation monitoring device (LKJ) curve cannot consider special scenes, and the method can effectively improve driving safety of the locomotive driver. Moreover, the method provides a solid foundation for intelligent and automatic development of the railway industry. Moreover, the locomotive driving assistance curve provides detailed information of the running state of a line ahead for the driver. The driver can know the running state, including key parameters such as speed and traction force, of the train ahead in advance with reference to the driving assistance curve. This allows the driver to predict traction, brake level and air brake application timing in advance, thus controlling the train to run more accurately.

Although the present disclosure is described in detail with reference to the foregoing examples, those of ordinary skill in the art should understand that they can still made modifications to the technical solutions described in all the foregoing examples, or make equivalent substitutions to some technical features in the examples. These modifications or substitutions do not make the essence of the corresponding technical solutions depart from the spirit and scope of the technical solutions in all the examples of the present disclosure.

**Claims**

1.  A method for calculating a locomotive driving assistance curve, **characterized by** comprising:

determining a first continuous driving curve;

obtaining a target point to be inserted in a corresponding running scene within a distance ahead of a train and corresponding target point information, wherein the target point information comprises a target position, a target speed, an expected deceleration reaching the target point, and an expected acceleration reaching a next curve segment from the target point;

comparing the target speed of the target point to be inserted with a first curve speed corresponding to the target position on the first continuous driving curve, and determining whether to add the target point to be inserted;

obtaining, in a case where the target point to be inserted is added, a first intersection point and a second intersection point of a curve segment where the target point is inserted and the first continuous driving curve; and

adding the target point to be inserted, the first intersection point, and the second intersection point, that are to be added, to the first continuous driving curve, to generate the locomotive driving assistance curve.

2. The method for calculating a locomotive driving assistance curve according to claim 1, **characterized in that** the determining a first continuous driving curve comprises:

obtaining line information within a distance ahead of the train, and planning a first speed limit curve, wherein the line information comprises running stages of the train and first running information of the train in the running stages;

obtaining the following second running information of the train:

a current speed of the train, expected accelerations or expected decelerations when the train runs in different running stages;

determining curve intersection points through a positive-order and/or reverse-order calculation method based on the obtained line information and the second running information; and

connecting the curve intersection points based on the first speed limit curve, to form the first continuous driving curve.

3. The method for calculating a locomotive driving assistance curve according to claim 2, **characterized in that** the running stages of the train comprise a static speed limit running stage, a temporary speed limit running stage and an interval running time stage; and

the first running information of the train in the running stages comprises start positions, speed limit values and speed limit distances.

4. The method for calculating a locomotive driving assistance curve according to any one of claims 1 to 3, **characterized in that** the comparing the target speed of the target point to be inserted with a first curve speed corresponding to the target position on the first continuous driving curve, and determining whether to add the target point to be inserted comprise:

determining whether the first curve speed is great than the target speed, wherein in a case where the first curve speed is greater than the target speed, the target point needs to be added; and otherwise, the existing first continuous driving curve is maintained.

5. The method for calculating a locomotive driving assistance curve according to claim 4, **characterized in that** the obtaining, in a case where the target point to be inserted is added, a first intersection point and a second intersection point of a curve segment where the target point is inserted and the first continuous driving curve comprises:

searching the first continuous driving curve forwards from an index of a curve segment where the target position is located, to find a first index curve segment, wherein the first index curve segment satisfies that a deceleration from a start position of the first index curve segment to the target position is greater than the expected deceleration b_acc; and

searching the first continuous driving curve backwards from the index of the curve segment where the target position is located, to find a second index curve segment, wherein the second index curve segment satisfies that an acceleration from a start position of the second index curve segment to the target position is less than an expected acceleration a_acc.

6. The method for calculating a locomotive driving assistance curve according to claim 5, **characterized by** further comprising calculating a position point (b_pos, b_v) of the first intersection point and a position point (a_pos, a_v) of the second intersection point, wherein the calculating a position point (b_pos, b_v) of the first intersection point comprises:

obtaining start position information (temp1_pos, temp1_v) of the first index curve segment and an acceleration temp1_acc of a curve segment where the first intersection point is located; and

calculating the position point (b_pos, b_v) of the first intersection point based on the target point information, the obtained start position information (temp1_pos, temp1_v) of the first index curve segment, and the obtained acceleration temp1_acc of the curve segment where the first intersection point is located:

b_pos=(target_v$^2$-temp1_v$^2$-2 * b_acc * target_pos+2 * temp1_acc * temp1_pos)/(2 * (temp1_acc-b_acc))

$$b\_v=(target\_v^2\text{-}2*b\_acc*(target\_pos\text{-}b\_pos))^{1/2}$$

the calculating a position point (a_pos, a_v) of the second intersection point comprises:

obtaining start position information (temp1_pos, temp1_v) of the second index curve segment and an acceleration temp1_acc of a curve segment where the second intersection point is located; and

calculating the position point (a_pos, a_v) of the second intersection point based on the target point information, the obtained start position information (temp2_pos, temp2_v) of the second index curve segment, and the acceleration temp2_acc of the curve segment where the second intersection point is located:

a_pos=(target_v$^2$-temp2_v$^2$-2 * a_acc * target_pos+2 * temp2_acc * temp2_pos)/(2 * (temp2_acc-a_acc))

$$a\_v=(target\_v^2\text{-}2*a\_acc*(target\_pos\text{-}a\_pos))^{1/2}$$

wherein target_v is the target speed of the target point, and target_pos is the target position of the target point.

7. The method for calculating a locomotive driving assistance curve according to claim 6, **characterized in that** the running scenes comprise a stopping point, a phase separation section, a long steep down-ramp, and/or a target speed and a target position of automatic train protection (ATP).

8. The method for calculating a locomotive driving assistance curve according to claim 7, **characterized in that** when the corresponding running scene within a distance ahead of the train comprises the stopping point, the target point is the stopping point, stopping point information is obtained, a target position in the stopping point information is a stopping position, a target speed is 0, an expected deceleration reaching the stopping point is a stopping deceleration, and an expected acceleration reaching a next curve segment from the stopping point is 0.

9. The method for calculating a locomotive driving assistance curve according to claim 7, **characterized in that** when the corresponding running scene within a distance ahead of the train comprises the phase separation section, target points of the phase separation section comprise a start position and an end position for phase separation, wherein the start position information is obtained as follows:

obtaining a target position in start position information of a phase separation section as gfx_pos and a length of the phase separation section as gfx_len in real time;

determining whether a current position of the train falls within the phase separation section, and in a case where the current position of the train does not fall within the phase separation section,

defining, based on the target position gfx_pos, that an expected deceleration reaching the start position of the phase separation section is gfx_b_start_bcc, and an expected acceleration reaching a next curve segment from the start position of the phase separation section is gfx_a_start_acc;

obtaining a start position of a running stage, on the first continuous driving curve, corresponding to the start position of the phase separation section, and calculating a distance between the start position gfx_pos of the phase separation section and the obtained start position of the running stage;

obtaining a target speed of the start position of the phase separation section as v_gfx based on speed limit information, expected acceleration information, and the calculated distance of the running stage, obtained on the first continuous driving curve, corresponding to the start position of the phase separation section; and

defining, in a case where the current position of the train falls within the phase separation section, that the target position in the start position information is the current position gfx_pos, the target speed is the current speed v, the expected deceleration reaching the start position of the phase separation section is 0, and the expected acceleration reaching a next curve segment from the start position of the phase separation section is gfx_a_start_acc.

10. The method for calculating a locomotive driving assistance curve according to claim 9, **characterized in that** end position information is obtained as follows:

determining whether the current position of the train falls within the phase separation section, and defining, in a case where the current position of the train does not fall within the phase separation section, that a target position in the end position information is gfx_end _pos, a target speed is v_gfx, an expected deceleration reaching the end position of the phase separation section is 0, and an expected acceleration reaching a next curve segment from the end position of the phase separation section is gfx_a_end_acc; and

defining, in a case where the current position of the train falls within the phase separation section, that the end position of the phase separation section is gfx_end_pos, the target speed is the current speed v, the expected deceleration reaching the end position of the phase separation section is 0, and the expected acceleration reaching the next curve segment from the end position of the phase separation section is gfx_a_end_acc.

11. The method for calculating a locomotive driving assistance curve according to claim 7, **characterized in that** when the corresponding running scene within a distance ahead of the train comprises the long steep down-ramp, target point information in the long steep down-ramp is obtained as follows:

first, calculating a long steep down-ramp position ramp_start_pos closest to the train ahead of the train;

obtaining a speed ramp_v when an air brake is applied on the long steep down-ramp:

$$\text{ramp\_v} = \text{coast\_v} - \Delta v$$

wherein ramp_v is a target speed, coast_v is a speed of a curve segment where the long steep down-ramp position is located, $\Delta v$ is a speed threshold, and the speed threshold $\Delta v$ satisfies:

$$\mathrm{D}v = (acc_{\text{maximum acceleration of electric brake}} * 4/7 - ramp) * (t_{\text{charging time}} + t_{\text{brake cancellation delay}} + t_{\text{brake application delay}})$$

wherein ramp is a gradient corresponding to a current position of the train, and $acc_{\text{maximum acceleration of electric brake}} = F$ maximum electric brake/W; and

calculating a deviation distance according to ramp_v, coast_v, and an air brake deceleration target_acc:

$$\text{dis} = (\text{ramp\_v}^2 - \text{coast\_v}^2)/2/\text{target\_acc}$$

long steep down-ramp target position ramp_pos=ramp_start_pos+dis, wherein

an expected deceleration reaching a target point of the long steep down-ramp is the air brake deceleration target_acc, and an expected acceleration reaching a next curve segment from the target point of the long steep down-ramp is ramp_a_acc.

12. A system for calculating a locomotive driving assistance curve, **characterized by** comprising:

a determination module configured to determine a first continuous driving curve;

an obtaining module configured to obtain a target point to be inserted in a corresponding running scene within a distance ahead of a train and corresponding target point information, wherein the target point information comprises a target position, a target speed, an expected deceleration reaching the target point, and an expected acceleration reaching a next curve segment from the target point;

a determining module configured to compare the target speed of the target point to be inserted with a first curve speed corresponding to the target position on the first continuous driving curve, and determine whether to add the target point to be inserted;

a calculation module configured to obtain, in a case where the target point to be inserted is added, a first intersection point and a second intersection point of a curve segment where the target point is inserted and the first continuous driving curve; and
a generation module configured to add the target point to be inserted, the first intersection point, and the second intersection point, that are to be added, to the first continuous driving curve, to generate the locomotive driving assistance curve.

Determine a first continuous driving curve

Obtain a target point to be inserted in a corresponding running scene within a distance ahead of a train and corresponding target point information, where the target point information includes a target position, a target speed, an expected deceleration reaching the target point, and an expected acceleration reaching a next curve segment from the target point

Compare the target speed of the target point to be inserted with a first curve speed corresponding to the target position on the first continuous curve, and determine whether to add the target point to be inserted

Obtain, in a case where the target point to be inserted is added, a first intersection point and a second intersection point of a curve segment where the target point is inserted and the first continuous driving curve

Add the target point to be inserted, the first intersection point, and the second intersection point, that are to be added, to the first continuous driving curve, to generate the locomotive driving assistance curve

FIG. 1

FIG. 2

FIG. 3

FIG. 4

FIG. 5

FIG. 6

FIG. 7

FIG. 8

Determination module

Obtaining module

Determining module

Calculation module

Generation module

FIG. 9

**TRANSLATION**

## INTERNATIONAL SEARCH REPORT

| International application No. |
| --- |
| **PCT/CN2024/134660** |

| | |
| --- | --- |
| **A.** | **CLASSIFICATION OF SUBJECT MATTER** |
| | B61L15/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:B61L

Documentation searched other than minimum documentation to the extent that such documents are included in the fields searched

Electronic data base consulted during the international search (name of data base and, where practicable, search terms used)

CNABS, CNTXT, CNKI: 机车, 列车, 火车, 高铁, 地铁, 插入, 添加, 加入, 添入, 点, 驾驶, 行驶, 辅助, 曲线, 生成, 更新, 优化, 对比, 比较, 比对, 判断, 确定, 判定, 场景, 分相区, 长大下坡, 相交, 交叉, 交点,; VEN, EPTXT, USTXT, WOTXT, IEEE: locomotive, train, tall, subway, insert, add, point, compare, align, judge, determine, scene, phase division region, down slope, intersection, intersection point

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 118722776 A (BEIJING NATIONAL RAILWAY RESEARCH & DESIGN INSTITUTE OF SIGNAL & COMMUNICATION LTD.) 01 October 2024 (2024-10-01) claims 1-12 | 1-12 |
| A | CN 106379378 A (BEIJING JIAOTONG UNIVERSITY) 08 February 2017 (2017-02-08) description, paragraphs 62-166, and figures 1-4 | 1-12 |
| A | CN 107972698 A (TSINGHUA UNIVERSITY) 01 May 2018 (2018-05-01) entire document | 1-12 |
| A | JP 2002370645 A (MITSUBISHI ELECTRIC CORP.) 24 December 2002 (2002-12-24) entire document | 1-12 |
| A | JP 2021121149 A (TOSHIBA CORP. et al.) 19 August 2021 (2021-08-19) entire document | 1-12 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 May 2025** | **14 May 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

23

**INTERNATIONAL SEARCH REPORT**
Information on patent family members

International application No.

**PCT/CN2024/134660**

| Patent document cited in search report | | | Publication date (day/month/year) | Patent family member(s) | | | Publication date (day/month/year) |
|---|---|---|---|---|---|---|---|
| CN | 118722776 | A | 01 October 2024 | CN | 118722776 | B | 05 November 2024 |
| CN | 106379378 | A | 08 February 2017 | CN | 106379378 | B | 06 February 2018 |
| CN | 107972698 | A | 01 May 2018 | CN | 107972698 | B | 06 August 2019 |
| JP | 2002370645 | A | 24 December 2002 | JP | 4011864 | B2 | 21 November 2007 |
| JP | 2021121149 | A | 19 August 2021 | JP | 7433933 | B2 | 20 February 2024 |

Form PCT/ISA/210 (patent family annex) (July 2022)